# EUROPÄISCHE PATENTSCHRIFT

(11) **EP 1 354 754 B1**
(45) Veröffentlichungstag und Bekanntmachung des Hinweises auf die Patenterteilung: **17.10.2007**
(21) Anmeldenummer: 03007714.3
(22) Anmeldetag: 04.04.2003
(51) Int. Cl.: B60N 2/20

(54) **Beschlag für einen Fahrzeugsitz**
Hinge for a vehicle seat
Articulation pour un siège de véhicule

(30) Priorität: 19.04.2002 DE 10217501
(43) Veröffentlichungstag der Anmeldung: 22.10.2003
(73) Patentinhaber: KEIPER GmbH & Co. KG, 67657 Kaiserslautern (DE)
(72) Erfinder: Buhl, Karl-Heinz, 67657 Kaiserslautern (DE); Salewski, Richard, 67661 Kaiserslautern (DE)
(74) Vertreter: Patentanwälte Hosenthien-Held und Dr. Held

(56) Entgegenhaltungen:
- DE-A1- 19 514 380
- DE-C1- 4 342 438
- DE-C1- 19 809 940
- US-A- 5 918 940

## Beschreibung

Die Erfindung betrifft einen Beschlag für einen Fahrzeugsitz mit den Merkmalen des Oberbegriffs des Anspruches 1.

Aus der DE 195 14 380 A1, die dem Oberbegriff des Anspruchs 1 entspricht, ist ein Beschlag dieser Art bekannt, welcher in einem ersten Funktionsbereich an der Lehnendrehachse eine in radialer Richtung abgestufte Steuerscheibe aufweist, die mittels eines Steuerfingers abgefragt wird. Der Steuerfinger steht über einen Bowdenzug in Verbindung mit einer Schließvorrichtung einer Bodenverriegelung als einem zweiten Funktionsbereich. Vor dem Entriegeln der Bodenverriegelung wird mittels der beschriebenen Abfragemittel die Stellung der Lehne abgefragt. Die DE 43 42 438 C1 zeigt einen Fahrzeugsitz mit einer lastübertragenden Kopplung zweier schwenkbarer Bauteile, nämlich zweier Beine, mittels zweier Riemenscheiben und eines Treibriemens.

Der Erfindung liegt die Aufgabe zu Grunde, einen Beschlag der eingangs genannten Art mit erweiterten Funktionsmöglichkeiten zu schaffen. Diese Aufgabe wird erfindungsgemäß durch einen Beschlag mit den Merkmalen des Anspruches 1 gelöst. Vorteilhafte Ausgestaltungen sind Gegenstand der Unteransprüche.

Über das in geschlossener Form ausgebildete (d.h. als Schleife geführte) Zugmittel zwischen den Funktionsbereichen können in zwei entgegengesetzten Richtungen Zugkräfte übertragen werden, d.h. gegenseitige Abfragen der Funktionsbereiche in beiden Richtungen erfolgen, so dass die beiden Funktionsbereiche kinematisch gekoppelt sind. Mit dieser Ausgestaltung können Missbrauchskräfte aufgenommen werden, so dass eine missbräuchliche, den Sicherheitsvorschriften widersprechende Bedienung des Fahrzeugsitzes verhindert wird. Es erfolgt eine Trennung von Abfragefunktion und Lastaufnahme, d.h. das Zugmittel muss nur die genannten Mißbrauchskräfte übertragen oder aufnehmen. Ais Zugmittel kann beispielsweise ein Seil, ein Band oder eine Kette eingesetzt werden.

Rollen, über welche das Zugmittel in den Funktionsbereichen geführt ist, bieten den Vorteil einer geringen Reibung und im Falle, dass das Zugmittel, beispielsweise mit Mitnehmern in der Art einer Plombe, an der Rolle drehfest angebracht ist, worunter auch ein definierter Eingriff von Zahnrädern und Ketten zu verstehen sein soll, den Vorteil, dass ein Drehmoment übertragen werden kann. Durch die Wahl des Durchmessers der Rolle können die Missbrauchskräfte untersetzt werden, so dass sie besser aufgenommen werden können. Daher ist die dem ersten Funktionsbereich zugeordnete erste Rolle drehfest mit einem schwenkbaren Bauteil des Fahrzeugsitzes verbindbar, um die Schwenkbewegung dieses Bauteils auf das Zugmittel zu übertragen. Die dem zweiten Funktionsbereich zugeordnete zweite Rolle ist dann frei drehbar gelagert, wobei das Zugmittel vorzugsweise die Stellung und Drehbewegung der ersten Rolle auf die zweite Rolle überträgt, also zwischen den beiden Funktionsbereichen wirksam ist, ohne dass irgendwelche möglicherweise im Selbsthemmungsbereich arbeitenden Bauteile eingesetzt werden.

Die zweite Rolle weist vorzugsweise einen Anschlag auf, welcher eine Schwenkbewegung eines weiteren schwenkbaren Bauteils des Fahrzeugsitzes oder einer drehfest mit diesem Bauteil verbundenen Einheit begrenzt, je nach aktueller Stellung insbesondere verhindert, so dass ersteres Bauteil und dieses weitere Bauteil kinematisch auf Abfrage und Missbrauchsverhinderung miteinander gekoppelt sind.

In einer konstruktiv bevorzugten Ausführung ist die zweite Rolle mit einem etwas größeren Durchmesser ausgebildet und übergreift die im Durchmesser kleinere Einheit, welche eine Verriegelungsscheibe mit einer radial zurückspringenden Aussparung aufweist, wobei die Anschläge der zweiten Rolle an einem radial nach innen weisenden, innerhalb der Aussparung angeordneten Nocken ausgebildet sind. Diese Anordnung spart Bauraum, untersetzt ein über die Einheit eingeleitetes Drehmoment, und schützt zugleich die zusammenwirkenden Teilbereiche Nocken und Aussparung vor äußeren Einflüssen aus radialer Richtung.

Die Erfindung kann bei allen Fahrzeugsitzen eingesetzt werden, bei denen die Bewegung unterschiedlicher Bauteile über Abfragen gekoppelt werden soll, beispielsweise die Lehnenschwenkbewegung mit einer Bewegung eines Höheneinstellers oder eines Längseinstellers oder mit dem Verriegelungszustand einer Schließvorrichtung.

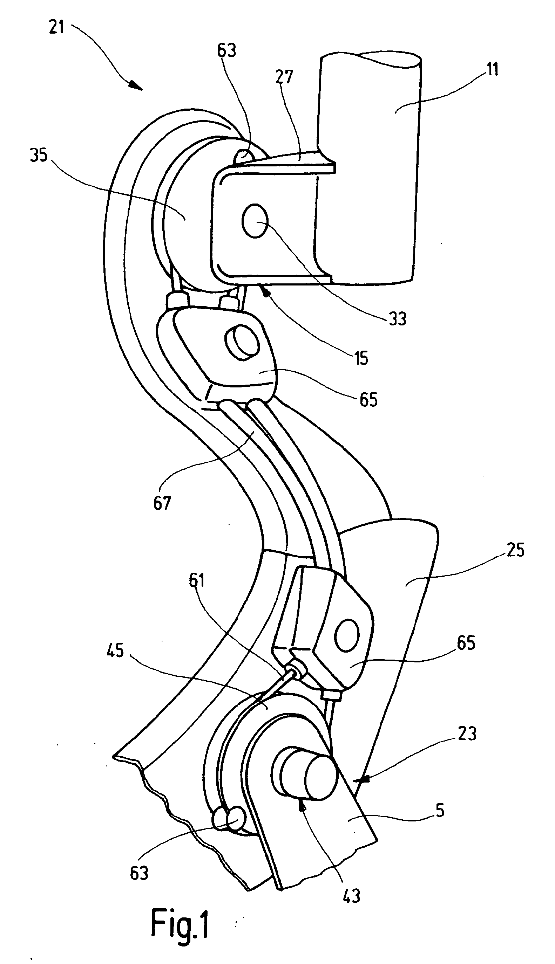

Im folgenden ist die Erfindung anhand eines in der Zeichnung dargestellten Ausführungsbeispiels samt Abwandlung näher erläutert. Es zeigen
- Fig. 1: eine perspektivische Ansicht des Ausführungsbeispiels in der Gebrauchsstellung des Fahrzeugsitzes,

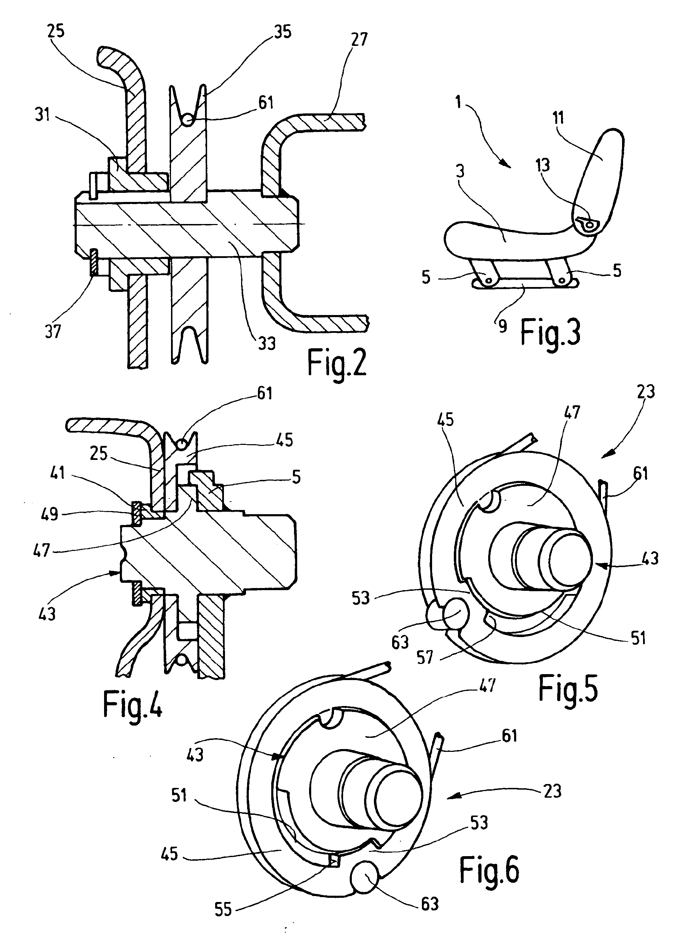

- Fig. 2: einen Schnitt durch das obere Gelenk,
- Fig. 3: eine schematische Seitenansicht eines Fahrzeugsitzes,
- Fig. 4: einen Schnitt durch das untere Gelenk,
- Fig. 5: eine perspektivische Ansicht des unteren Gelenks in der Gebrauchsstellung des Fahrzeugsitzes,

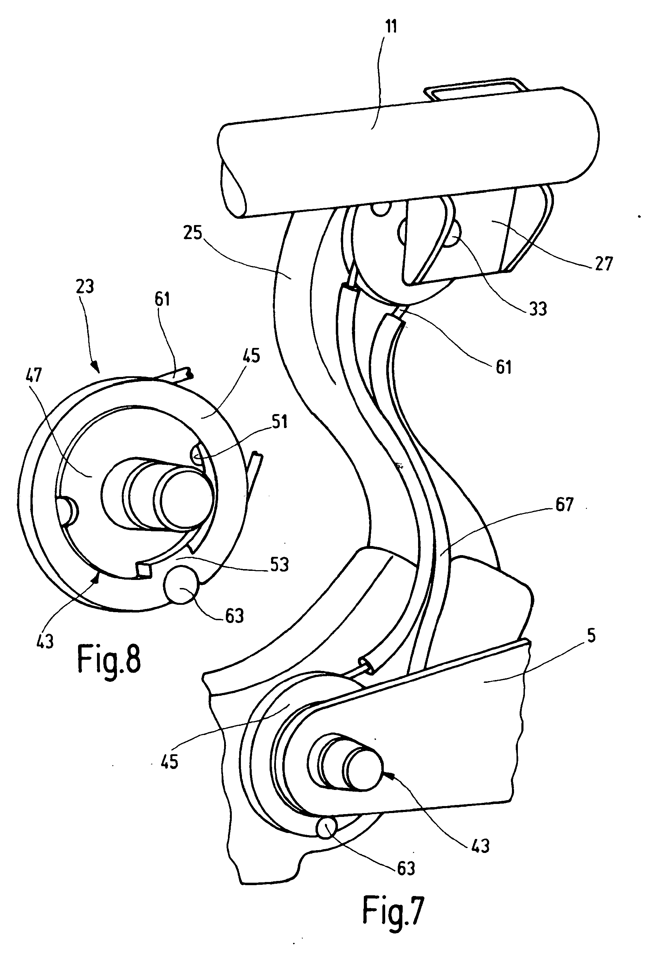

- Fig. 6: eine perspektivische Ansicht des unteren Gelenks bei vorgeklappter Lehne,
- Fig. 7: eine perspektivische Ansicht des Ausführungsbeispiels in der Bodenstellung des Fahrzeugsitzes, und
- Fig. 8: eine perspektivische Ansicht des unteren Gelenks in der Bodenstellung des Fahrzeugsitzes,

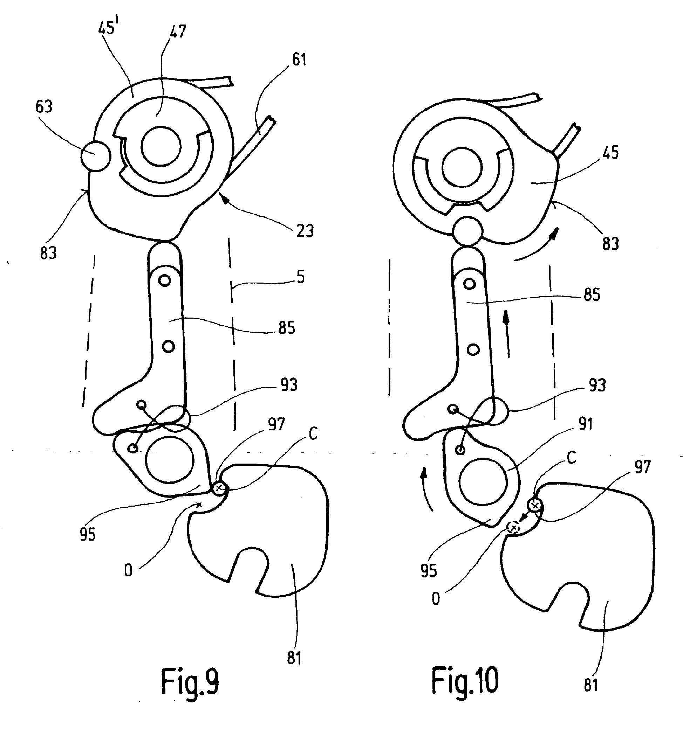

- Fig. 9: eine Teilansicht der Abwandlung in der Gebrauchsstellung, und
- Fig. 10 eine Fig. 9: entsprechende Ansicht nach dem Vorklappen der Lehne.

Bei einem Fahrzeugsitz 1 in einer hinteren Sitzreihe eines Kraftfahrzeuges ist ein Sitzteil 3 mittels vier Schwingen 5 unter Bildung eines Viergelenks auf jeder Sitzseite an einer fahrzeugstrukturfesten Konsole 9 angebracht. Das Viergelenk bildet zugleich einen Teil eines Höheneinstellers. Eine Lehne 11 des Fahrzeugsitzes ist mittels eines Lehneneinstellers 13 auf der im Ausführungsbeispiel linken Sitzseite und eines oberen Gelenks 15 auf der rechten Seite schwenkbar am Sitzteil 3 angebracht. Der Fahrzeugsitz 1 kann von einer einsitzbaren Gebrauchsstellung in eine flache Bodenstellung (flat floor position) gebracht werden, indem zunächst die Lehne 11 auf das Sitzteil 3 geklappt wird und dann die Schwingen 5 nach vorne und unten, also auf die Konsole 9, geschwenkt werden.

Im Ausführungsbeispiel weist der Fahrzeugsitz 1 rechts hinten einen kombinierten Beschlag 21 auf. Der Beschlag 21 umfaßt als ersten Funktionsbereich das genannte obere Gelenk 15, mittels welchem die Lehne 11 über einen lehnenstrukturfesten Lehnenadapter 27 am Sitzrahmenseitenteil 25 angelenkt ist und deren Relativbewegung das obere Gelenk 15 zugeordnet ist, und als zweiten Funktionsbereich ein unteres Gelenk 23, mittels welchem die rechte hintere Schwinge 5 an einem Sitzrahmenseitenteil 25 des Sitzteils 3 angelenkt ist und deren Relativbewegung das untere Gelenk 23 zugeordnet ist. Die beiden Funktionsbereiche des Beschlags 21 sind miteinander kinematisch gekoppelt.

Das obere Gelenk 15 umfaßt eine in das Sitzrahmenseitenteil 25 eingepresste erste Lagerbuchse 31, in welcher ein Lagerbolzen 33 drehbar gelagert ist. Auf der nach innen, d.h. vorliegend nach links gewandten Seite des Sitzrahmenseitenteils 25, sitzt eine in der Art einer Rolle ausgebildete, d.h. mit einer Rille in Umfangsrichtung auf der Außenfläche versehene, Steuerscheibe 35 drehfest auf dem Lagerbolzen 33, welcher in weiterer Fortsetzung in den Lehnenadapter 27 gepreßt und mit diesem verschweißt ist. Auf der nach außen gewandten Seite des Sitzrahmenseitenteils 25 ist der Lagerbolzen 33 durch einen ersten Sicherungsring 37 oder dergleichen in seiner axialen Richtung gesichert.

Das untere Gelenk 23 als ein zweiter Funktionsbereich des Beschlags 21 umfaßt eine in das Sitzrahmenseitenteil 25 eingepresste zweite Lagerbuchse 41, in welcher eine Verriegelungseinheit 43 drehbar gelagert ist. Die Verriegelungseinheit 43 ist im wesentlichen als Bolzen mit verschiedenen Durchmessern ausgebildet. Auf der nach innen, d.h. vorliegend nach links gewandten Seite des Sitzrahmenseitenteils 25, ist auf einem gegenüber der zweiten Lagerbuchse 41 im Durchmesser größer bemessenen Abschnitt eine in der Art einer Rolle ausgebildete Anschlagscheibe 45 drehbar gelagert. Hieran schließt sich als nächster Abschnitt der Verriegelungseinheit 43 eine Verriegelungsscheibe 47 mit größerem, ungefähr der Hälfte des Durchmessers der Anschlagscheibe 45 entsprechenden Durchmesser an. Auf das daran anschließende freie Ende der Verriegelungseinheit ist die rechte hintere Schwinge 5 geschoben und drehfest mit der Verriegelungseinheit 43 verbunden, vorliegend verschweißt. Auf der nach außen gewandten Seite des Sitzrahmenseitenteils 25 ist die Verriegelungseinheit 43 durch einen zweiten Sicherungsring 49 oder dergleichen in ihrer axialen Richtung gesichert.

Die Anschlagscheibe 45 übergreift in axialer Richtung die kleinere, weiter innen angeordnete Verriegelungsscheibe 47. Dabei weist die Verriegelungsscheibe 47 über etwa ein Drittel ihres Umfangs eine in ihrer radialen Richtung zurückspringende Aussparung 51 auf, in welcher ein radial nach innen vorspringender, in Umfangsrichtung deutlich kürzerer Nocken 53 der Anschlagscheibe 45 angeordnet ist. Die Endflächen des Nockens 53 in Umfangsrichtung bilden einen ersten und zweiten Anschlag 55 bzw. 57.

Ein als Zugmittel dienendes Seil 61, nämlich die Seele eines Bowdenzuges, ist an seinen beiden Enden und ungefähr in seiner Mitte mit je einem plombenartigen Mitnehmer 63 versehen. Das eine Ende des Seils 61 ist mittels des zugehörigen Mitnehmers 63 drehfest an der Steuerscheibe 35 als einer ersten Rolle angebracht. Von dort aus ist das Seil 61 über einen gewissen Umfangsbereich der Steuerscheibe 35 in deren Rille geführt, weiter durch eine abschnittsweise vorhandene, mittels zweier Hüllenhalter 65 am Sitzrahmenseitenteil 25 angebrachte Hülle 67 zum unteren Gelenk 23 und dort über einen gewissen Umfangsbereich in der Rille der Anschlagscheibe 45 als einer zweiten Rolle geführt, mit welcher das Seil 61 durch den mittleren Mitnehmer 63 drehfest verbunden ist. Von diesem Mitnehmer 63 aus ist das Seil 61 über einen weiteren Umfangsbereich in der Rille der Anschlagscheibe 45 und über eine weitere, abschnittsweise vorhandene, mittels der Hüllenhalter 65 am Sitzrahmenseitenteil 25 angebrachte Hülle 67 zurück zum oberen Gelenk 15 geführt, wo das über einen weiteren Umfangsbereich durch die Rille der Steuerscheibe 35 laufende Seil 61 mittels des dritten Mitnehmers 63 in unmittelbarer Nachbarschaft des ersten Mitnehmers 63 an der Steuerscheibe 35 drehfest angebracht ist. Das Seil 61 weist dadurch eine geschlossene Form auf. Die Steuerscheibe 35, die Anschlagscheibe 45 und das Seil 61 bilden Abfragemittel für die unterschiedlichen Funktionsbereiche des Beschlags 21.

In der Gebrauchsstellung liegt die Verriegelungsscheibe 47 am ersten Anschlag 55 an. Für den Übergang von der Gebrauchsstellung in die Bodenstellung muß zunächst die Lehne 11 entriegelt und vorgeklappt werden. Der Lehnenadapter 27 nimmt dabei über den Lagerbolzen 33 die Steuerscheibe 35 mit, welche über das Seil 61 die Anschlagscheibe 45 dreht. Wenn die Lehne 11 ihre Endposition erreicht hat, liegt der zweite Anschlag 57 an der Verriegelungsscheibe 47 an. Nun können die Schwingen 5 entriegelt und zur Konsole 9 hingeschwenkt werden, wobei die rechte, hintere Schwinge 5 die Verriegelungseinheit 43 mitnimmt, bis bei Erreichen der Bodenstellung die Verriegelungsscheibe 47 wieder in Anlage an den ersten Anschlag 55 gelangt. Die Rückkehr in die Gebrauchsstellung erfolgt in umgekehrter Reihenfolge.

Das Seil 61 koppelt die beiden Gelenke 15 und 23 derart kinematisch miteinander, daß nur der beschriebene Ablauf möglich ist. Wenn in einem Mißbrauchsfall in der Gebrauchsstellung versucht wird, die Schwingen 5 auf die Konsole 9 zu schwenken, wird die Verriegelungseinheit 43 - und damit die rechte hintere Schwinge 5 - durch die Anlage der Verriegelungsscheibe 47 an den ersten Anschlag 55 und über das Seil 61 durch die aufrechte Lehne 11 gesperrt, d.h. der Fahrzeugsitz 1 kann nicht abgesenkt werden. Wenn in einem weiteren Mißbrauchsfall von der Bodenstellung aus versucht wird, die Lehne 11 aufzurichten, wird diese über das Seil 61 aufgrund der Anlage des ersten Anschlags 55 an der Verriegelungsscheibe 47 ebenfalls gesperrt.

Eine nachfolgend beschriebene Abwandlung gleicht dem Ausführungsbeispiel weitgehend, weshalb gleiche Bauteile mit gleichen Bezugszeichen bezeichnet und die Bezugszeichen gleichwirkender Bauteile mit einem Apostroph versehen sind. Die Abwandlung kombiniert die bereits vorhandene Abfrageverbindung zwischen erstem und zweitem Funktionsbereich 15 und 23, d.h. zwischen Lehne 11 und Schwinge 5, mit einer weiteren Abfrageverbindung zu einer Schließvorrichtung 81, die für die lösbare Befestigung der Konsole 9 an der Fahrzeugstruktur vorgesehen ist. Die Schließvorrichtung 81 bildet also einen dritten Funktionsbereich.

An der modifizierten Anschlagscheibe 45' ist ein nockenartiger Bereich mit einer Steuerkurve 83 angeformt, wobei die Steuerkurve 83 sich entlang des Umfangs der Anschlagscheibe 45' fortsetzt. Entlang der Schwinge 5 ist ein Schieber 85 in Längsrichtung beweglich geführt, wobei der Schieber 85 aus zwei flachen Teilen besteht, die auf verschiedenen Seiten der Schwinge 5 angeordnet und mittels zweier durch einen Längsschlitz der Schwinge 5 greifender Niete verbunden sind. Der Schieber 85 wird durch eine nicht näher dargestellte Druckfeder mit seinem oberen Ende gegen die Steuerkurve 83 vorgespannt. An seinem unteren Ende ist eine an der Schwinge 5 drehbar gelagerte Sperre 91 vorgesehen, die mit einer nockenartigen Materialpartie am Schieber 85 anliegt. Eine zwischen dem Schieber 85 und der Sperre 91 eingehängte, vorgespannte Koppelfeder 93 sichert die Anlage der Sperre 91 am Schieber 85, d.h. sie beaufschlagt die Sperre 91 in der Zeichnung im Uhrzeigersinn.

Die Sperre 91 weist auf der Seite, welche der am Schieber 85 anliegenden Materialpartie radial gegenüberliegt, eine Nase 95 auf. In unmittelbarer Nachbarschaft der Nase ist ein Entriegelungsbolzen 97 der zunächst verriegelten Schließvorrichtung 81 angeordnet, wobei diese verriegelte Position mit C bezeichnet ist. Zum Entriegeln der Schließvorrichtung 81 muß der Entriegelungsbolzen 97 etwas nach vorne und unten in eine entriegelte Position O bewegt werden, was die Sperre 91 in der beschriebenen Gebrauchsstellung mit aufrechter Lehne 11 verhindert.

Wird nun die Lehne 11 vorgeschwenkt und dadurch die Steuerscheibe 35 und über das Seil 61 die Anschlagscheibe 45' gedreht, so wird ein radial weiter zurückspringender Teil der Steuerkurve 83 zum Schieber 85 gedreht, d.h. der Schieber 85 bewegt sich aufgrund seiner Vorspannung entlang der Schwinge 5 nach oben. Die durch die Koppelfeder 93 vorgespannte Sperre 91 kann sich drehen, wodurch die Nase 95 wegschwenkt. Der Entriegelungsbolzen 97 kann nun ungehindert von der verriegelten Position C zu entriegelten Position O bewegt werden, worauf die Schließvorrichtung 81 geöffnet ist und der Fahrzeugsitz 1 entnommen werden kann.

Im Normalfall wird bei der Rückkehr in die Gebrauchsstellung zunächst die Schließvorrichtung 81 bei Aufsetzen auf einen Bolzen oder dergleichen in der Fahrzeugstruktur automatisch verriegelt, so daß der Entriegelungsbolzen 97 sich ungehindert zurück in die verriegelte Position C bewegt. Beim Zurückschwenken der Lehne 11 wird der Schieber 85 über die Steuerkurve 83 nach unten gedrückt, worauf der Schieber 85 die Sperre 91 zurückschwenkt. Der Entriegelungsbolzen 97 wird nun wieder gesperrt.

Sollten in einem Mißbrauchsfall die Lehne 11 und die Schwinge 5 aufgerichtet werden, bevor die Schließvorrichtung 81 verriegelt, so befindet sich die Sperre 91 zwar in ihrer sperrenden Stellung. Der von der entriegelten Position O in die verriegelte Position C wechselnde Entriegelungsbolzen 97 kann jedoch in dieser Richtung die Sperre 91 aufdrehen und die Nase 95 passieren. Danach schwenkt die Sperre 91 aufgrund der Federkraft der Koppelfeder 83 wieder zurück in ihre sperrende Stellung.

### Bezugszeichenliste

- 1: Fahrzeugsitz
- 3: Sitzteil
- 5: Schwinge
- 9: Konsole
- 11: Lehne
- 13: Lehneneinsteller
- 15: oberes Gelenk, erster Funktionsbereich
- 21: Beschlag
- 23: unteres Gelenk, zweiter Funktionsbereich
- 25: Sitzrahmenseitenteil
- 27: Lehnenadapter
- 31: erste Lagerbuchse
- 33: Lagerbolzen
- 35: Steuerscheibe, erste Rolle
- 37: erster Sicherungsring
- 41: zweite Lagerbuchse
- 43: Verriegelungseinheit
- 45: Anschlagscheibe, zweite Rolle
- 47: Verriegelungsscheibe
- 49: zweiter Sicherungsring
- 51: Aussparung
- 53: Nocken
- 55: erster Anschlag
- 57: zweiter Anschlag
- 61: Seil, Zugmittel
- 63: Mitnehmer
- 65: Hüllenhalter
- 67: Hülle
- 81: Schließvorrichtung
- 83: Steuerkurve
- 85: Schieber
- 91: Sperre
- 93: Koppelfeder
- 95: Nase
- 97: Entriegelungsbolzen
- C: verriegelte Position
- O: entriegelte Position

## Patentansprüche

1. Beschlag für einen Fahrzeugsitz, insbesondere für einen Kraftfahrzeugsitz, mit wenigstens zwei Funktionsbereichen (15, 23), welche jeweils der Relativbewegung und/oder Entriegelung unterschiedlicher Bauteile (11, 25; 25, 5) des Fahrzeugsitzes (1) zugeordnet sind, und Abfragemitteln (35, 45, 61; 45') zwischen den Funktionsbereichen (15, 23), **dadurch gekennzeichnet, dass** die Abfragemittel (35, 45, 61; 45') ein in geschlossener Form ausgebildetes Zugmittel (61) zwischen den Funktionsbereichen (15, 23) aufweisen und dass jeder Funktionsbereich (15, 23) eine Rolle (35, 45; 45') aufweist, über welche das Zugmittel (61) geführt ist, wobei die dem ersten Funktionsbereich (15) zugeordnete erste Rolle (35) drehfest mit einem schwenkbaren Bauteil (11) des Fahrzeugsitzes (1) verbindbar ist und die dem zweiten Funktionsbereich (23) zugeordnete zweite Rolle (45; 45') frei drehbar gelagert ist.

2. Beschlag nach Anspruch 1, **dadurch gekennzeichnet, dass** das Zugmittel (61) drehfest an der ersten Rolle (35) angebracht ist.

3. Beschlag nach Anspruch 1 oder 2, **dadurch gekennzeichnet, dass** die zweite Rolle (45; 45') wenigstens einen Anschlag (55, 57) aufweist, welcher eine Schwenkbewegung eines weiteren schwenkbaren Bauteils (5) oder einer drehfest mit diesem verbundenen Einheit (43) begrenzt.

4. Beschlag nach Anspruch 3, **dadurch gekennzeichnet, dass** die zweite Rolle (45; 45') die im Durchmesser kleinere, eine Verriegelungsscheibe (47) mit einer radial zurückspringenden Aussparung (51) aufweisende Einheit (43) übergreift, wobei die Anschläge (55, 57) der zweiten Rolle (45; 45') an einem radial nach innen weisenden, innerhalb der Aussparung (51) angeordneten Nocken (53) ausgebildet sind.

5. Beschlag nach einem der Ansprüche 1 bis 4, **dadurch gekennzeichnet, dass** das Zugmittel (61) drehfest an der zweiten Rolle (45; 45') angebracht ist.

6. Beschlag nach einem der Ansprüche 1 bis 5, **dadurch gekennzeichnet, dass** das Zugmittel (61) die Stellung der ersten Rolle (35) auf die zweite Rolle (45; 45') überträgt.

7. Beschlag nach einem der Ansprüche 1 bis 6, **dadurch gekennzeichnet, dass** einer der Funktionsbereiche (23) in Abfrageverbindung mit einer Schließvorrichtung (81) zur Befestigung des Fahrzeugsitzes (1) steht.

8. Fahrzeugsitz, insbesondere Kraftfahrzeugsitz, mit einem mittels schwenkbaren Schwingen (5) gelagerten Sitzteil (3) und einer relativ zum Sitzteil (3) schwenkbaren Lehne (11), **gekennzeichnet durch** einen Beschlag (21) nach einem der Ansprüche 1 bis 7, dessen erster Funktionsbereich (15) der Schwenkbewegung der Lehne (11) und dessen zweiter Funktionsbereich (23) der Schwenkbewegung einer Schwinge (5) zugeordnet ist.

## Claims

1. A fitting for a vehicle seat, in particular for a motor vehicle seat, having at least two functional regions (15, 23), which are in each case assigned to the relative movement and/or unlocking of different components (11, 25; 25, 5) of the vehicle seat (1), and interrogation means (35, 45, 61; 45') between the functional regions (15, 23), **characterised in that** the interrogation means (35, 45, 61; 45') have a traction means (61), which is designed in closed form, between the functional regions (15, 23) and **in that** each functional region (15, 23) has a roller (35, 45; 45') over which the traction means (61) is guided, wherein the first roller (35), which is assigned to the first functional region (15), is connectable in a rotationally fixed manner to a pivotable component (11) of the vehicle seat (1) and the second roller (45; 45'), which is assigned to the second functional region (23), is mounted in a freely rotatable manner.

2. A fitting according to Claim 1, **characterised in that** the traction means (61) is fitted in a rotationally fixed manner to the first roller (35).

3. A fitting according to Claim 1 or 2, **characterised in that** the second roller (45; 45') has at least one stop (55, 57), which limits a pivoting movement of a further pivotable component (5) or of a unit (43) connected in a rotationally fixed manner to said component.

4. A fitting according to Claim 3, **characterised in that** the second roller (45; 45') fits over the unit (43), which is smaller in diameter and has a locking disk (47) with a radially set back cut-out (51), the stops (55, 57) of the second roller (45; 45') being formed on a radially inwardly pointing cam (53) arranged within the cut-out (51).

5. A fitting according to any one of Claims 1 to 4, **characterised in that** the traction means (61) is fitted in a rotationally fixed manner to the second roller (45; 45').

6. A fitting according to any one of Claims 1 to 5, **characterised in that** the traction means (61) transmits the position of the first roller (35) to the second roller (45; 45').

7. A fitting according to any one of Claims 1 to 6, **characterised in that** one of the functional regions (23) is connected for interrogation purposes to a locking device (81) for the fastening of the vehicle seat (1).

8. A vehicle seat, in particular a motor vehicle seat, having a seat part (3) supported by means of pivotable rockers (5) and a backrest (11) which can be pivoted relative to the seat part (3), **characterised by** a fitting (21) according to any one of Claims 1 to 7, the first functional region (15) of which is assigned to the pivoting movement of the backrest (11) and the second functional region (23) of which is assigned to the pivoting movement of a rocker (5).

## Revendications

1. - Armature pour un siège de véhicule, en particulier pour un siège de véhicule automobile, avec au moins deux zones fonctionnelles (15, 23), lesquelles sont attribuées selon le cas au mouvement relatif et/ou au déverrouillage de différents composants (11, 25 ; 25, 5) du siège de véhicule (1), et des moyens de balayage (35, 45, 61 ; 45') entre les zones fonctionnelles (15, 23), **caractérisée par le fait que** les moyens de balayage (35, 45, 61 ;45') présentent un moyen de traction (61) réalisé en forme fermée entre les zones fonctionnelles (15, 23) et que chaque zone fonctionnelle (15, 23) présente un rouleau (35, 45 ; 45'), sur lequel le moyen de traction (61) est guidé, à l'occasion de quoi le premier rouleau (35) attribué à la première zone fonctionnelle (15) est apte à être relié de façon solidaire en rotation avec un composant pivotant (11) du siège de véhicule (1) et le deuxième rouleau (45 ; 45') attribué à la deuxième zone fonctionnelle (23) est monté apte à tourner librement.

2. - Armature selon la revendication 1, **caractérisée par le fait que** le moyen de traction (61) est appliqué de façon solidaire en rotation sur le premier rouleau (35).

3. - Armature selon l'une des revendications 1 ou 2, **caractérisée par le fait que** le deuxième rouleau (45 ; 45') présente au moins une butée (55, 57), laquelle limite un mouvement de pivotement d'un autre composant pivotant (5) ou d'une unité (43) liée de façon solidaire en rotation avec celui-ci.

4. - Armature selon la revendication 3, **caractérisée par le fait que** le deuxième rouleau (45 ; 45') s'étend sur l'unité (43) plus petite en diamètre, présentant un disque de verrouillage (47) avec un évidement (51) en retrait radialement, à l'occasion de quoi les butées (55, 57) du deuxième rouleau (45 ; 45') sont formées sur une saillie (53) disposée à l'intérieur de l'évidement (51), dirigée radialement vers l'intérieur.

5. - Armature selon l'une des revendications 1 à 4, **caractérisée par le fait que** le moyen de traction (61) est appliqué de manière solidaire en rotation sur le deuxième rouleau (45 ; 45').

6. - Armature selon l'une des revendications 1 à 5, **caractérisée par le fait que** le moyen de traction (61) transfère la position du premier rouleau (35) sur le deuxième rouleau (45 ; 45').

7. - Armature selon l'une des revendications 1 à 6, **caractérisée par le fait que** l'une des zones fonctionnelles (23) est en liaison de balayage avec un dispositif de fermeture (81) pour la fixation du siège de véhicule (1).

8. - Siège de véhicule, en particulier siège de véhicule automobile, avec une partie de siège (3) montée au moyen de bielles pivotantes (5) et un dossier (11) pivotant par rapport à la partie de siège (3), **caractérisé par** une armature (21) telle que définie à l'une des revendications 1 à 7, dont la première zone fonctionnelle (15) est attribuée au mouvement de pivotement du dossier (11) et dont la deuxième zone fonctionnelle (23) est attribuée au mouvement de pivotement d'une bielle (5).
